# EUROPEAN PATENT APPLICATION

(11) **EP 4 672 476 A2**
(43) Date of publication of application: **31.12.2025**
(21) Application number: 25214836.6
(22) Date of filing: 28.03.2022
(51) Int. Cl.: H01M 50/46

(54) **SYSTEM COMPRISING A BATTERY MODULE AND METHOD FOR INSPECTING BATTERY MODULE**

(30) Priority: 08.06.2021 JP 2021095821
(62) Divisional of application: 22819910.5
(71) Applicant: Vehicle Energy Japan Inc., Hitachinaka-shi, Ibaraki 312-8505 (JP)
(72) Inventor: TAKAHASHI, Hirofumi, Hitachinaka-shi, Ibaraki, 312-8505 (JP); KUBOTA, Osamu, Hitachinaka-shi, Ibaraki, 312-8505 (JP); WATAHIKI, Yoshitaka, Hitachinaka-shi, Ibaraki, 312-8505 (JP)
(74) Representative: Strehl & Partner mbB

(57) **Abstract**

Provided are a battery module which can be efficiently inspected without applying an electrical load to the battery module and a method for inspecting the battery module. This battery module has a unit cell 13 equipped with a battery container 13a accommodating battery elements, a thermistor 23 disposed in contact with an outer surface of the battery container 13a and thermally connected thereto, and an electrically insulating, rigid insulation cover 17 partially covering the battery container 13a and pressing the thermistor 23 against the battery container 13a, wherein a through hole 26 through which a heat application means 28, 29 passes is formed in the insulation cover 17, and the thermistor 23 is disposed at a position outside a heat application area formed when the through hole 26 is orthographically projected on a planar section 21 of the battery container 13a.

## Description

### Technical Field

The present invention relates to a battery module constructed by coupling a plurality of unit cells together and a method for inspecting the battery module.

### Background Art

For example, an electrolyte battery including a positive electrode layer and a negative electrode layer that can occlude/discharge lithium ions is in wide use in various fields, such as electric vehicle, power storage, and information equipment, as a battery of high energy density. As electrolyte batteries, those using liquid electrolyte and those using solid electrolyte are known.

Secondary batteries using an electrolyte battery are comprised of a battery pack obtained by coupling a plurality of unit cells (electrolyte batteries) together. These battery modules are capable of obtaining large electric power by electrically connecting unit cells together through an electrode member (hereinafter, referred to as bus bar) formed of such conductive metal as aluminum, copper, or iron.

A battery module includes a pair of external terminals that enable power delivery of the battery module and the bus bars and a pair of the module external terminals are formed of an insulating member formed mainly of engineering plastic that insulates bus bars adjoining to each other and insulates power electrics including the module external terminals.

The battery module includes a temperature detector comprised of a thermistor and the like for detecting a temperature of the battery module itself and acquires battery temperature information and utilizes the information to control charging/discharging of the battery module. Especially, a battery module equipped in an automobile or the like is used under a wide range of environmental temperature from a low-temperature condition to a high-temperature condition. The input/output property and the life property of a battery depend on temperature; therefore, battery temperature information is indispensable to appropriately control charging/discharging of a battery module.

In such a battery module equipped with a temperature detector, confirmation of whether the temperature detector is normally operating is required in terms of product quality. For this purpose, in general, operation of the temperature detector is confirmed by operating the battery module to rise a temperature of the battery module and confirming whether this temperature change can be detected. However, this method poses an electrical load on the battery module and thus the method is not advisable.

As a method for coping with this problem, for example, a technology described in Japanese Unexamined Patent Application Publication No. 2016-9663 (Patent Literature 1) is known. According to Patent Literature 1, a heat transfer plate provided in contact with a side face of a battery is heated by such an external heat source as a heater to cause a temperature change in a thermistor attached to an upper face of the battery and operation of the thermistor is confirmed from this temperature change.

### Citation List

### Patent Literature

PTL 1: Japanese Unexamined Patent Application Publication No. 2016-9663

### Summary of Invention

### Technical Problem

The technology described in Patent Literature 1 poses a problem: an inspection cannot be efficiently conducted. For example, one or more of the following problems arise: an operation process to attach or detach a heat transfer plate is required and thus, an inspection task is burdensome; a power consumption of such a heat source as a heater for heating a heat transfer plate is increased; and heat is applied to a temperature detector through a heat transfer plate and thus, temperature rise is slow and it takes much time to confirm an operation of the temperature detector.

It is an object of the present invention to provide a battery module that enables efficient inspection without applying an electrical load to the battery module and a method for inspecting the battery module.

### Solution to Problem

A typical feature of the present invention is in that the present invention includes: a battery having a battery container accommodating a battery element; a temperature detector thermally connected with an outer surface of the battery container in contact therewith; and an electrically insulating, rigid covering member that partly covers the battery container and brings the temperature detector into contact with the battery container. An inspection through hole through which a heat application means is passed is formed in the covering member and the temperature detector is disposed in a position outside a heat application area that is a projection area obtained when the inspection through hole is projected onto the outer surface of the battery container.

### Advantageous Effects of Invention

According to the present invention, the heat application area can be directly heated or cooled by the heat application means through the inspection through hole provided in the covering member to raise or lower a temperature of the vicinity of the temperature detector in a short time. As a result, an inspection can be efficiently conducted.

### Brief Description of Drawings

Fig. 1 is a perspective view of an external appearance of a battery module to which the present invention is applied;
Fig. 2 is an exploded perspective view of the battery module shown in Fig. 1 as is partly dismantled;
Fig. 3 is a sectional view of a first embodiment of the present invention before an insulation cover is attached;
Fig. 4 is a sectional view of the first embodiment of the present invention, showing an inspection state after the insulation cover is attached;
Fig. 5 is a sectional view illustrating a modification to the first embodiment of the present invention, showing an inspection state after the insulation cover is attached;
Fig. 6 is a schematic diagram of a thermistor inspection system;
Fig. 7 is a characteristic diagram showing a variation in measured thermistor temperature with an elapsed time after a battery container is heated;
Fig. 8 is a flowchart explaining a flow of an inspection using the inspection system shown in Fig. 6;
Fig. 9 is a sectional view of a second embodiment of the present invention, showing a state before an insulation cover is attached;
Fig. 10 is a sectional view of a third embodiment of the present invention, showing a state after an insulation cover is attached;
Fig. 11 is a top view of a battery module in a fourth embodiment of the present invention, explaining a state of a wiring installed in an insulation cover;
Fig. 12 is a perspective view of an external appearance of the battery module shown in Fig. 11;
Fig. 13 is a sectional view of a fifth embodiment of the present invention, showing a state before an insulation cover is attached;
Fig. 14 is a sectional view of a sixth embodiment of the present invention, showing a state before an insulation cover is attached;
Fig. 15 is a schematic diagram of the battery controller shown in Fig. 14; and
Fig. 16 is a flowchart explaining a flow of an inspection using the inspection system shown in Fig. 15.

### Description of Embodiments

Hereafter, a detailed description will be given to embodiments of the present invention with reference to the drawings. However, the present invention is not limited to the following embodiments and various modifications and applications are also included in the present invention within the technical concept of the present invention.

### Embodiment 1

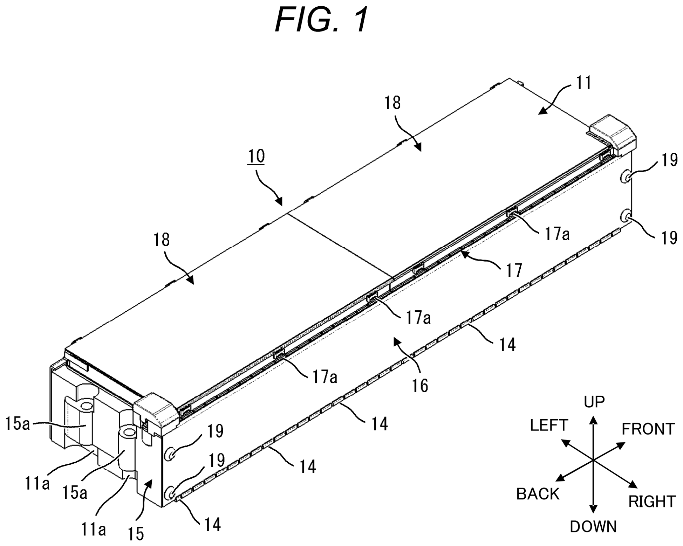

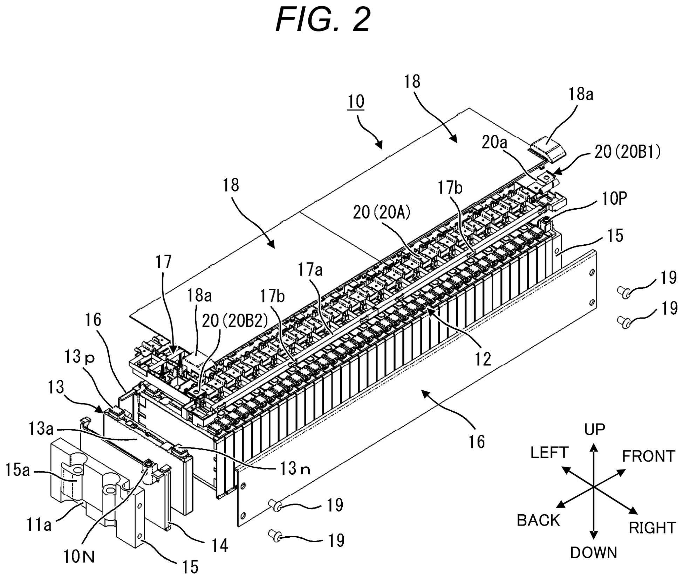

Fig. 1 shows a battery module according to an embodiment of the present invention as viewed from an obliquely upward direction. The words of "up and down/left and right/front and back" shown in Fig. 1 and Fig. 2 indicate visual directions of the battery module shown in Fig. 1 and Fig. 2. For this reason, when a direction of "up and down/left and right/front and back" is referred to in the following description, the description is based on the visual directions shown in Fig. 1 and Fig. 2.

A housing 11 constituting the battery module 10 in Fig.1 and Fig. 2 is a shape of a substantially elongated rectangular parallelepiped whose size in a longitudinal direction (front and back direction) is larger than the sizes thereof in a short-length direction (left and right direction) and a height direction (up and down direction) and holds a plurality of unit cells 13 (refer to Fig. 2) constituting a cell group 12 (refer to Fig. 2). More specifically, the housing 11 includes a plurality of cell holders 14 (refer to Fig. 2), a pair of end plates 15, a pair of side plates 16, an insulation cover (inner covering member) 17, and a module cover (outer covering member) 18. The end plates 15 and the side plates 16 are firmly fixed with a fixing member 19 such as a fixing bolt or a rivet as shown in Fig. 1.

The unit cell 13 holds therein a battery element comprised of an electrolyte, a positive electrode layer, a negative electrode layer, and the like. As the electrolyte, liquid or solid can be used.

The cell holder 14 (refer to Fig. 2) is constructed of a resin material, for example, PBT (Polybutylene terephthalate). The cell holders 14 are placed between unit cells 13 adjoining to each other of the unit cells 13 laminated in the front and back direction and hold the unit cells in such a manner that each unit cell 13 is sandwiched therebetween from both sides in the thickness direction (front and back direction).

In the longitudinal direction (front and back direction) of the unit cells 13 constituting the cell group 12, a pair of the cell holders 14 disposed at both ends of the cell group 12 are respectively provided with battery pack terminals 10P, 10N (refer to Fig. 2) as external terminals of the battery module 10. The module terminal 10P is a battery pack positive electrode terminal and the module terminal 10N is a battery pack negative electrode terminal.

A pair of the end plates 15 are plate-like members made of metal. In the lamination direction (front and back direction) of the unit cells 13 constituting the cell group 12, the pair of the end plates 15 are disposed on both sides of the cell group 12 through a pair of the cell holders 14 disposed on both sides of the cell group 12. One faces of a pair of the end plates 15 are opposed to the unit cells 13 held by the cell holders 14 so that the unit cells are sandwiched therebetween and a fixing portion 15a is provided in the other faces thereof facing outward on the opposite side to the cell group 12.

The fixing portion 15a provided in a pair of the end plates 15 is formed substantially in a cylindrical shape and a part of the side face of the cylinder is protruded from outer flat faces of the end plates 15 toward the front direction or the back direction of the battery pack. The fixing portion 15a has a bolt hole along the central axis parallel to the height direction (up and down direction) of the end plates 15.

This fixing portion 15a of the end plate 15 is a fixing member mounting portion for fixing the battery module 10 to an external mechanism, such as a vehicle and other machines. The lower end face of the fixing portion 15a of the end plate 15 is a supporting surface 11a of the housing 11 supported by an external mechanism as described above.

A more specific description will be given. The battery module 10 can be fixed on an external mechanism by supporting the supporting surface 11a of the housing 11 that is a bottom face of the fixing portion 15a of the end plate 15 by the external mechanism and screwing a bolt inserted into the bolt hole in the fixing portion 15a into a female screw or a nut of the external mechanism and fastening them together. In other words, the battery module 10 is fixed on an external mechanism by a bolt and is brought into a state in which the battery module is supported by the external mechanism at least on the supporting surface 11a of the housing 11 that is the lower end face of the fixing portion 15a of the end plate 15.

When the battery module 10 is mounted in a vehicle, such as an electric vehicle or a hybrid vehicle, an external mechanism on which the battery module 10 is fixed is a body of the vehicle. Though not specially limited, with a vehicle on which the battery module 10 is fixed placed on a level road surface, the length direction (front and back direction) and the width direction (left and right direction) of the housing 11 of the battery module 10 is substantially parallel to the horizontal direction; and the height direction (up and down direction) of the housing 11 of the battery module 10 is substantially parallel to the vertical direction. In this state, the supporting surface 11a of the housing 11 is substantially parallel to a level plane.

A pair of the side plates 16 are disposed on both sides in the width direction (left and right direction) of the unit cells 13 constituting the cell group 12 through the cell holders 14. A pair of the side plates 16 are a metal member substantially in a rectangular plate shape and are disposed on both sides in the width direction (left and right direction) of the housing 11 in opposition to each other.

A pair of the side plates 16 are substantially rectangular. The lamination direction (front and back direction) of the unit cells 13 constituting the cell group 12 is taken as a long side direction, that is, a longitudinal direction; and the height direction (up and down direction) of the unit cells 13 constituting the cell group 12 is taken as a short side direction, that is, a short-length direction.

Both end portions of a pair of the side plates 16 in the longitudinal direction are respectively fastened to a pair of the end plates 15 by a fixing member 19 such as a bolt or a rivet. Both end portions of a pair of the side plates 16 in the short-length direction are respectively engaged with recessed groove portions provided in the cell holders 14.

An insulation cover 17 is a plate-like member formed of an electrically insulating resin material such as PBT having a predetermined rigidity and is disposed in opposition to the upper end face of the battery container 13a provided with a cell positive electrode terminal 13p and a cell negative electrode terminal 13n of each unit cell 13. The predetermined rigidity cited here refers to a rigidity at such a level that the insulation cover is not unnecessarily deformed when the insulation cover 17 is attached to the battery module 10. That is, the insulation cover 17 only has to have a rigidity sufficient for an insulation cover.

The insulation cover 17 includes: an opening that exposes the upper end faces of the cell positive electrode terminals 13p and cell negative electrode terminals 13n of the unit cells 13; and a partition wall that insulates the cell positive electrode terminals 13p and cell negative electrode terminals 13n of unit cells 13 adjoining to each other and bus bars 2 adjoining to each other.

The partition wall of the insulation cover 17 is so provided as to surround the cell positive electrode terminal 13p and cell negative electrode terminal 13n of each unit cell 13 and the bus bars 20. Various electric wirings connected to the cell group 12 and an electronic circuit board constituting a battery controller (not shown) are disposed in the insulation cover 17.

The electronic circuit board, not shown, is disposed on the opposite side to the cell group 12 of the insulation cover 17 between the insulation cover 17 and the module cover 18, that is, in the height direction of the housing 11 and is electrically connected with the bus bars 20 or a temperature sensor (thermistor), not shown, for detecting a temperature of the unit cells 13 through a connection conductor such as a lead wire or a printed wiring.

**In** Fig. 2, the battery module 10 mainly includes: module terminals 10P, 10N (refer to Fig. 2) as external terminals; the cell group 12 including a plurality of the unit cells 13; and the bus bars 20 that electrically and mechanically connect the unit cells 13 of the cell group 12 and further electrically and mechanically connect the cell group 12 and the module terminals 10P, 10N with each other.

The cell group 12 is formed by laminating flat square unit cells 13, that is, thin hexahedral or rectangular parallelepiped unit cells 13 whose thickness is smaller than a width and a height thereof in the longitudinal direction (front and back direction). The unit cell 13 is a square lithium-ion battery and includes: a flat square battery container 13a; an electrode group, not shown, an electrolytic solution or a solid electrolyte sheet housed in the battery container 13a; and a pair of the cell terminals 13p, 13n connected with the electrode group and disposed on the upper end face of the battery container 13a in the height direction. As mentioned above, the cell terminal 13p is a positive electrode terminal and the cell terminal 13n is a negative electrode terminal.

The cell terminals 13p, 13n of the unit cell 13 have a substantially rectangular parallelepiped three-dimensional shape protruded from the upper end face of the battery container 13a in the height direction. The cell terminals 13p, 13n and the battery container 13a and the battery container 13a and the electrode group are respectively electrically insulated from each other by a resin insulating member. The unit cells 13 constituting the cell group 12 are alternately inverted by 180° and laminated so that the cell positive electrode terminal 13p of one of unit cells 13 adjoining to each other and the cell negative electrode terminal 13n of the other unit cell 13 adjoin each other in the lamination direction (front and back direction).

The bus bar 20 is a connection conductor that electrically and mechanically connects a plurality of unit cells 13 constituting the cell group 12 and further electrically and mechanically connects the cell group 12 and the module terminals 10P, 10N. The bus bars 20 that electrically and mechanically connect a plurality of the unit cells 13 of the cell group 12 are a plurality of bus bars 20A that electrically and mechanically connect the unit cells 13 together and are joined to the upper end faces of the cell terminals 13p, 13n of the unit cells 13 of the cell group 12 exposed in an opening in the insulation cover 17 by welding.

By electrically connecting the cell positive electrode terminal 13p of one unit cell 13 of a pair of unit cells 13 adjoining to each other in the lamination direction with the cell negative electrode terminal 13n of the other unit cell 13 through a bus bar 20A, the cell group 12 in which all the unit cells 13 are electrically connected in series can be constructed.

The bus bars 20 that connect the cell group 12 to the module terminals 10P, 10N are a pair of bus bars 20B disposed at both ends of a unit cell 13 of the cell group 12 in the lamination direction. One 20B1 of a pair of bus bars 20B is electrically and mechanically connected to the cell positive electrode terminal 13p of one unit cell 13 of a pair of the unit cells 13 disposed at both ends of a plurality of unit cells 13 in the lamination direction. The other 20B2 of the pair of the bus bars 20B is electrically and mechanically connected to the cell negative electrode terminal 13n of the other unit cell 13 of the pair of the unit cells 13 disposed at both ends of the unit cells 13 in the lamination direction.

One end of the one 20B1 of the pair of the bus bars 20B is joined to the upper end face of the cell positive electrode terminal 13p of a unit cell 13 by welding and the other end is fastened to the module positive electrode terminal 10P disposed on one side in the lamination direction of the unit cells of the cell group 10 by a fastening member such as a rivet or a bolt. One end of the other 20B2 of the pair of the bus bars 20B is joined to the upper end face of the cell negative electrode terminal 13n of a unit cell 13 by welding and the other end is fastened to the module negative electrode terminal 10N disposed on the other side in the lamination direction of the unit cells 13 of the cell group 12 by a fastening member such as a rivet or a bolt.

The description will be back to Fig. 1. The module cover 18 is an electrically insulating plate-like member, such as PBT, made of resin and is disposed at the upper end of the housing 11 on the opposite side to the cell group 12 so as to cover the insulation cover 17 and an electronic circuit board in the height direction (up and down direction) of the housing 11. The module cover 18 is provided with a terminal cover 18a in positions corresponding to the module terminals 10P, 10N so as to cover the upper parts of the module terminals 10P, 10N. The module cover 18 is fixed on the upper part of the insulation cover 17 by engaging an engaging pawl 17b provided in a frame portion 17a of the insulation cover 17 with a side edge of the module cover.

According to the present embodiment, as described later, an inspection is conducted before the assembled battery module 10 is sealed with the module cover 18.

The battery module 10 configured as mentioned above is capable of delivering and receiving electric power between the battery module and an external generator or motor through an inverter device by the module terminals 10P, 10N thereof being electrically connected to the external generator or motor through the inverter device as a power converter.

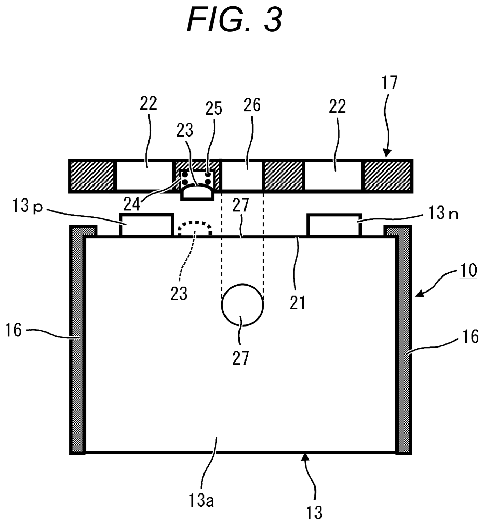

A description will be given to an embodiment of the present invention. Fig. 3 illustrates a configuration for explaining an approach of an embodiment of the present invention, showing a state before an inspection of a temperature detector is conducted. As shown in Fig. 2, almost all the components are assembled to the battery module 10 in this state. The battery module is ready for an inspection before the battery module 10 is sealed with the module cover 18.

In Fig. 3, as mentioned above, the cell positive electrode terminal 13p and the cell negative electrode terminal 13n are provided in the upper face of a battery container 13a constituting a unit cell 13 and a planar area 21 where a temperature detector (hereinafter, referred to as thermistor) is disposed is formed between the cell positive electrode terminal 13p and the cell negative electrode terminal 13n. The battery container 13a is formed of a metal plate to facilitate temperature transfer to the thermistor disposed in the planar area 21. The thermistor may be provided in each battery container 13a or a plurality of the battery containers 13a are grouped and the thermistor may be provided in each group.

The insulation cover 17 is attached and fixed to the upper side of the side plates 16 integrated with the cell group 12 sandwiched in between. A terminal housing portion 22 for housing the cell positive electrode terminal 13p and the cell negative electrode terminal 13n is formed in the insulation cover 17. When the insulation cover 17 is attached to the cell group 12, the cell positive electrode terminal 13p and the cell negative electrode terminal 13n are housed in this terminal housing portion 22.

A housing recessed portion 24 that houses the thermistor 23 is formed in a face of the insulation cover 17 located on the cell group 12 side. A repelling means 25 having a function of pressing the thermistor 23 against the planar area 21 in the upper face of the battery container 13a is equipped in the housing recessed portion 24. The repelling means 25 can be used in various modes (for example, coil spring, leaf spring, and the like).

By housing the thermistor 23 in the insulation cover 17 as mentioned above, the thermistor 23 and the insulation cover 17 can be handled together. As a result, a handling property can be enhanced during assembly. Further, since an inspection through hole 26 described later is also formed in the insulation cover 17, a positional relation between the thermistor 23 and the inspection through hole 26 can be precisely determined and wire routing is facilitated.

As indicated by a broken line, the thermistor 23 can also be installed in the planar area 21 of the battery container 13a and be brought into contact by pressing with the repelling means 25 provided in the insulation cover 17. In either case, in the present embodiment, the thermistor 23 is brought into contact with the planar area 21 of the battery container 13a to ensure a heat transfer path.

Therefore, when the insulation cover 17 is assembled, the thermistor 23 is pressed against and brought into contact with the planar area 21 in the upper face of the battery container 13a by the repelling means 25 and thereby forms a heat transfer path. As a result, heat of the planar area 21 is detected by the thermistor 23 and utilized to control charging/discharging of the battery module 10.

The thermistor 23 is pressed against the planar area 21 by the repelling means 25 to form a heat transfer path. However, because of some cause, a state of contact between the thermistor 23 and the planar area 21 of the battery container 13a may be changed. For example, when the thermistor 23 is brought into partial contact with the planar area 21, a heat transfer area is reduced and as a result, a problem of degradation in the detection accuracy of the thermistor is caused.

In the course of an assembling process, any failure or problem can occur in the thermistor 23 itself. If the assembling process is completed in this state, a problem that the battery module 10 itself becomes a defective occurs.

For this reason, it is required to confirm that the thermistor 23 is correctly attached and the thermistor itself is free from a failure or a problem by a simply configured efficient inspection.

Consequently, the present embodiment is characterized in that the inspection through hole 26 is formed in the insulation cover 17 adjacently to the thermistor 23 attached to the insulation cover 17 as the insulation cover 17 is viewed from above. Therefore, the inspection through hole 26 and the thermistor 23 are inevitably disposed adjacently to each other with a predetermined distance ensured in between.

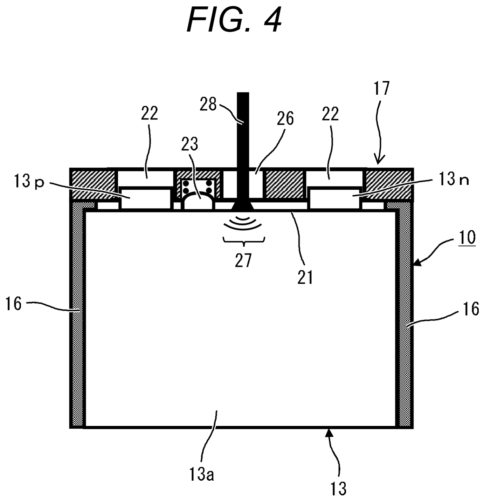

With the insulation cover 17 assembled to the battery container 13a (refer to Fig. 4), a heat application area 27 obtained by orthographically projecting the inspection through hole 26 to the planar area 21 is virtually formed in the planar area 21 of the battery container 13a as viewed in a direction orthogonal to the planar area 21 of the battery container 13a. Since the inspection through hole 26 is circular in the present embodiment, the heat application area 27 is also formed in a circular shape. The inspection through hole 26 need not be circular and may be in a shape of a rectangle, an oval, or a polygon equal to or more than a pentagon. In short, the inspection through hole only has to have a function of allowing a heat application means, describe later, to pass through.

Therefore, with the thermistor 23 placed in the planar area 21, the thermistor 23 and the heat application area 27 do not overlap with each other and directly reflect a positional relation between the inspection through hole 26 formed in the insulation cover 17 and the thermistor 23. For this reason, the thermistor 23 is located outside the heat application area 27 as described later; therefore, contact between the heat application means and the thermistor 23 can be avoided. If the heat application means and the thermistor 23 are in direct contact with each other, a state of contact between the thermistor 23 and the planar area 21 of the battery container 13a is not reflected and thus an accurate inspection possibly cannot be conducted.

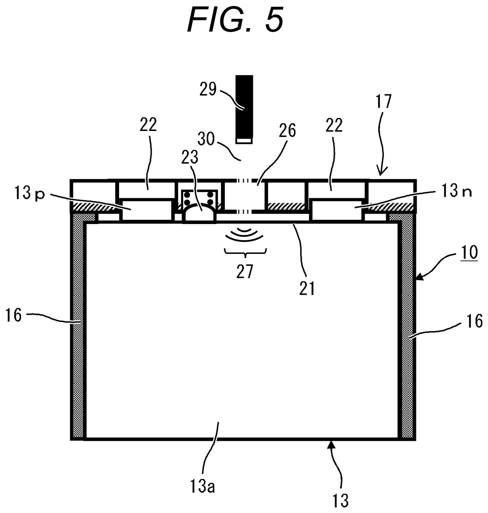

A concrete description will be given to a method for inspecting the thermistor 23 with reference to Fig. 4 and Fig. 5. Fig. 4 and Fig. 5 are identical with each other in configuration except heat application means are different.

In Fig 4, an assembled battery module 10 with a module cover 18 not installed yet is prepared. In this state, an insulation cover 17 is attached to a battery container 13a and the cell positive electrode terminal 13P and the cell negative electrode terminal 13n are housed in the terminal housing portion 22 of the insulation cover 17. In this state, a thermistor 23 is pressed against the planar area 21 of the battery container 13a by a repelling means 25 and placed there.

Subsequently, a temperature control member 28 as a heat application means is passed through the inspection through hole 26 and the temperature control member 28 is moved until the temperature control member is brought into contact with the heat application area 27. For this reason, the inspection through hole 26 is formed in a shape in size sufficient for the temperature control member 28 to pass through. In the present embodiment, the temperature control member 28 uses a resistance heating element and is so controlled as to give a constant amount of thermal energy to the battery container 13a. As a result, a stable heat quantity can be continuously given directly to the planar area 21 of the battery container 13a.

By giving a constant amount of thermal energy, a precise temperature change can be acquired. In the present embodiment, a temperature is detected before and after a predetermined time has elapsed to determine a temperature difference; therefore, it is important to give a constant amount of thermal energy at least during the predetermined time.

The heat given to the heat application area 27 reaches the thermistor 23 through the planar area 21 of the battery container 13a. The thermistor 23 is varied in electric resistance value according to this transferred heat and thus a temperature can be measured. Specifically, a temperature can be measured by converting an electric resistance value detected by the thermistor 23 into a temperature in accordance with a conversion table.

According to the present embodiment, as mentioned above, thermal energy can be given directly to the battery container 13a; therefore, a small amount of thermal energy is sufficient and a power consumption can be reduced. Since the thermistor 23 and the temperature control member 28 as a heating source are in proximity to each other, heat is immediately transferred to the thermistor 23 and an operation of the thermistor can be checked in a short time. An inspection is conducted just by inserting the temperature control member 28 into the inspection through hole 26 formed in the insulation cover 17 and applying heat and withdrawing the temperature control member 28 when the inspection is completed; therefore, an inspection task is simplified.

When an electric resistance change is not caused in the thermistor 23 even by applying heat, it can be detected that the thermistor 23 itself involves a failure or a problem. Whether contact between the thermistor 23 and the planar area 21 of the battery container 13a is kept in a favorable state can be detected according to an amount of temperature change within a predetermined time. A method for determining a state of contact between the thermistor 23 and the planar area 21 of the battery container 13a will be described later.

The temperature control member 28 described up to this point is configured to utilize a resistance heating element to give "hot heat" to the battery container 13a. Instead of a resistance heating element, a Peltier element may be used to give "cold heat" to the battery container 13a. Also in this case, an inspection method is the same as the above-mentioned method.

In the present embodiment, it is important for the thermistor 23 not to be exposed in the heat application area 27 formed by the inspection through hole 26 to prevent mechanical interference between the thermistor 23 and the temperature control member 28. To reduce thermal energy and shorten an inspection time, it is required that thermal resistance be low between the thermistor 23 and the heat application area 27 and for this reason, it is important for the thermistor 23 to be installed in proximity to the heat application area 27.

Therefore, the positions of the thermistor 23 and the inspection through hole 26 only have to be determined so as to implement a positional relation that meets this condition. In the present embodiment, as shown in Fig. 3, the thermistor 23 and the inspection through hole 26 are brought closer to each other as much as possible. As a result, the inspection through hole 26 and the thermistor 23 are inevitably adjacently disposed with a predetermined distance ensured in between.

A description will be given to another example of a heat application means. The embodiment in Fig. 5 is different from the embodiment in Fig. 4 in that a laser irradiation device 29 is used as a heat application means.

In Fig. 5, first, an assembled battery module 10 with a module cover 18 not installed yet is prepared. In this state, an insulation cover 17 is attached to a battery container 13a and the cell positive electrode terminal 13P and the cell negative electrode terminal 13n are housed in the terminal housing portion 22 of the insulation cover 17. In this state, a thermistor 23 is pressed against the planar area 21 of the battery container 13a by a repelling means 25 and placed there.

Subsequently, a laser irradiation member 29 as a heat application means is moved so as to be positioned above the inspection through hole 26. For this reason, the inspection through hole 26 is formed in such a size that laser light 30 from the laser irradiation member 29 can arrive at the planar area 21 without interference with the insulation cover 17 or the like. The present embodiment is so controlled as to give a constant amount of light energy to the battery container 13a. As a result, stable light energy can be given directly to the planar area 21 of the battery container 13a in a non-contact manner.

Laser light 30 given to the heat application area 27 is converted into heat and reaches the thermistor 23 through the planar area 21 of the battery container 13a. The thermistor 23 is varied in resistance value according to this transferred heat and a temperature can be thereby measured. Specifically, a temperature can be measured by converting an output voltage from the thermistor 23 in accordance with a conversion table.

According to the present embodiment, as mentioned above, light energy can be given directly to the battery container 13a; therefore, a small amount of light energy is sufficient and a power consumption can be reduced. Since the thermistor 23 and an irradiation position of the laser irradiation member 29 as a heating source are in proximity to each other, heat is immediately transferred to the thermistor 23 and an operation of the thermistor can be checked in a short time. An inspection is conducted just by moving the laser irradiation member 29 to above the upper face of the inspection through hole 26 formed in the insulation cover 17 and irradiating there with laser light 30 and moving the laser irradiation member 29 when the inspection is completed; therefore, an inspection task is simplified.

When an output voltage of the thermistor 23 is not produced even by applying heat by laser light 30, it can be detected that the thermistor 23 itself involves a failure a problem. Whether contact between the thermistor 23 and the planar area 21 of the battery container 13a is kept in a favorable state can be detected according to an amount of temperature change within a predetermined time.

A description will be given to a configuration of an inspection system for the thermistor 23 and a method for inspecting whether contact between the thermistor 23 and the planar area 21 of the battery container 13a is kept in a favorable state.

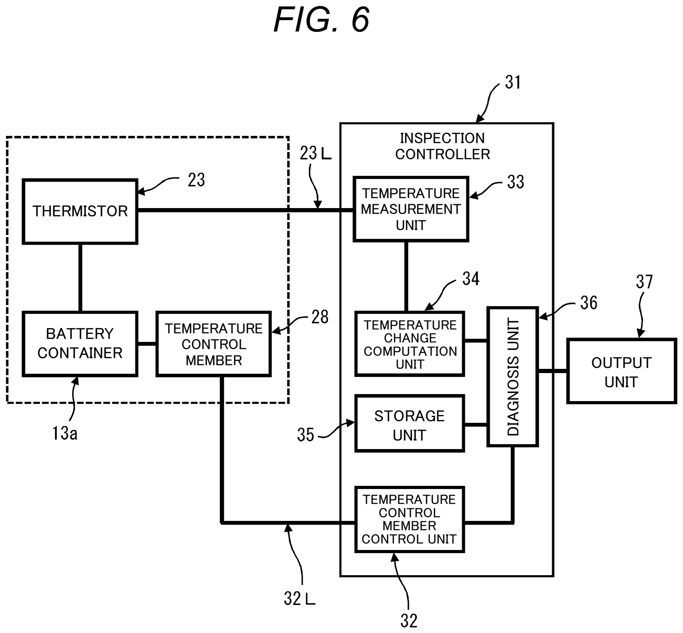

Fig. 6 illustrates a configuration of an inspection system required for an inspection. The configurations and arrangement positions of the battery container 13a, temperature control member 28, and thermistor 23 in Fig. 6 are identical with those shown in Fig. 4.

A temperature control member control unit 32 provided in an inspection controller 31 in Fig. 6 exercises heating control on the temperature control member 28 through a wire 32L and controls heating start timing, heating duration, heating end timing, an amount of heating energy, and the like. An output voltage of the thermistor 23 produced by this heating is inputted to a temperature measurement unit 33 provided in the inspection controller 31 through a wire 23L at predetermined time intervals and converted into temperature information. Temperature information can be obtained by utilizing an "output voltage-temperature table." This temperature information is stored in a RAM area (not shown) in the inspection controller 31 at predetermined time intervals.

The inspection controller 31 is equipped with a temperature change value computation unit 34, which computes how much a temperature of the thermistor 23 has changed (difference) within a predetermined time period. A result of this computation is inputted to a subsequent diagnosis unit 36 as an actual temperature change value (ΔTact). This actual temperature change value (ΔTact) can be obtained by reading temperature information stored in the RAM area.

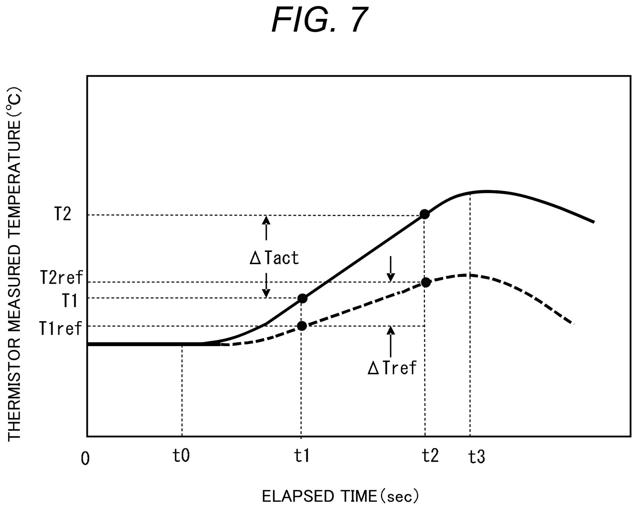

Specifically, an actual temperature change value can be obtained by subtracting temperature information (T1) stored at some time from temperature information (T2) stored at a time a predetermined time after when the temperature information (T1). Actual temperature change value (ΔTact) will be described with reference to Fig. 7. In the present embodiment, when temperature information (T1) and temperature information (T2) are obtained, the temperature control member control unit 32 is caused to stop heating by the temperature control member 28.

The inspection controller 31 includes a storage unit 35 comprised of a flash ROM and the like and a temperature change threshold value (ΔTref) is stored in the storage unit 35. The temperature change threshold value (ΔTref) is taken as a reference value for determining whether contact between the thermistor 23 and the planar area 21 of the battery container 13a is kept in a favorable state. The temperature change threshold value (ΔTref) is inputted to the subsequent diagnosis unit 36. The temperature change threshold value (ΔTref) will be described with reference to Fig. 7.

When it is determined by the diagnosis unit 36 of the inspection controller 31 whether contact between the thermistor 23 and the planar area 21 of the battery container 13 is in a favorable state, a result of this determination is sent to an output unit 37 and displayed in a display or the like. Therefore, an operation can grasp a result of diagnosis from the output unit 37.

When contact between the thermistor 23 and the planar area 21 of the battery container 13a is kept in a favorable state, the operator attaches the module cover 18 and completes the assembling work. When contact between the thermistor 23 and the planar area 21 of the battery container 13a is not kept in a favorable state, the operator corrects a state of attachment of the thermistor 23 to the insulation cover 17 and performs the assembling work again and conducts the same inspection again.

Fig. 7 explains how to obtain an actual temperature change value (ΔTact) and a temperature change threshold value (ΔTref). The horizontal axis indicates an elapsed time and the vertical axis indicates a measured temperature of the thermistor 23. The solid line indicates an actual temperature and the broken line indicates a temperature obtained when a state of contact between the thermistor 23 and the planar area 21 is intentionally set bad. A temperature indicated by the broken line is used to obtain a temperature change threshold value (ΔTref) mentioned above.

When heating is started by the temperature control member 28 at time (t0), a temperature of the thermistor 23 rises as indicated by the solid line and temperature information measured by the thermistor is obtained at time (t1). An actual temperature at this time is temperature (T1). At time (t2) when a predetermined time has passed, temperature information measured by the thermistor is obtained again. An actual temperature at this time is temperature (T2). Then, temperature (T1) at time (t1) is subtracted from temperature (T2) at time (t2) to obtain an actual temperature change value (ΔTact).

A temperature change threshold value (ΔTref) has been obtained in advance by an experiment or a simulation technique. In this case, as indicated by the broken line, a state of contact between the thermistor 23 and the planar area 21 of the battery container 13a has been determined on an assumption of a rejected contact state (abnormal contact state). In a rejected contact state, a value slightly smaller than a value from temperature information of an accepted contact state (normal contact state) is obtained. In an accepted contact state, temperature information of the thermistor 23 is determined to be sufficiently reliable.

Therefore, when an actual temperature change value (ΔTact) is larger than a temperature change threshold value (ΔTref), an acceptance (normal) is determined and when an actual temperature change value (ΔTact) is smaller than a temperature change threshold value (ΔTref), a rejection (abnormal) is determined.

When heating is started by the temperature control member 28 at time (t0) in a rejected contact state, as indicated by the broken line, a temperature of the thermistor 23 rises but a slope is smaller than the solid line. Then, at time (t1), temperature information measured by the thermistor 23 is obtained. An actual temperature at this time is temperature (T1ref). At time (t2) when a predetermined time has passed, temperature information measured by the thermistor 23 is obtained again. An actual temperature at this time is temperature (T2ref). Then, the temperature (T1ref) at time (t1) is subtracted from the temperature (T2ref) at time (t2) to obtain a temperature change threshold value (ΔTref). This temperature change threshold value (ΔTref) is a determination reference value and is stored in the flash ROM.

Therefore, by determining a relation between a temperature change threshold value (ΔTref) and an actual temperature change value (ΔTact), it can be determined whether contact between the thermistor 23 and the planar area 21 of the battery container 13a is kept in a favorable state. When this determination is made, the inspection is terminated at time (t3).

Before Step (Step S16) of determining a state of contact, described later, it is desirable that an actual temperature (T1) and an actual temperature (T2) be measured and stored in the RAM area and then heating of the temperature control member 28 be stopped. Thus, an unnecessary power consumption can be avoided and the thermistor 23 can be prevented from being unnecessarily heated.

By making a time from time (t0) to time (t1) and a time from time (t1) to time (t2) equal to each other in length, temperature change measuring conditions are identical and thus, a correct determination can be made. A temperature change rate may be determined by a computation of (T2-T1)/(t2-t1). Such use of a temperature change rate can reduce an influence of variation and thus a more precise determination can be made.

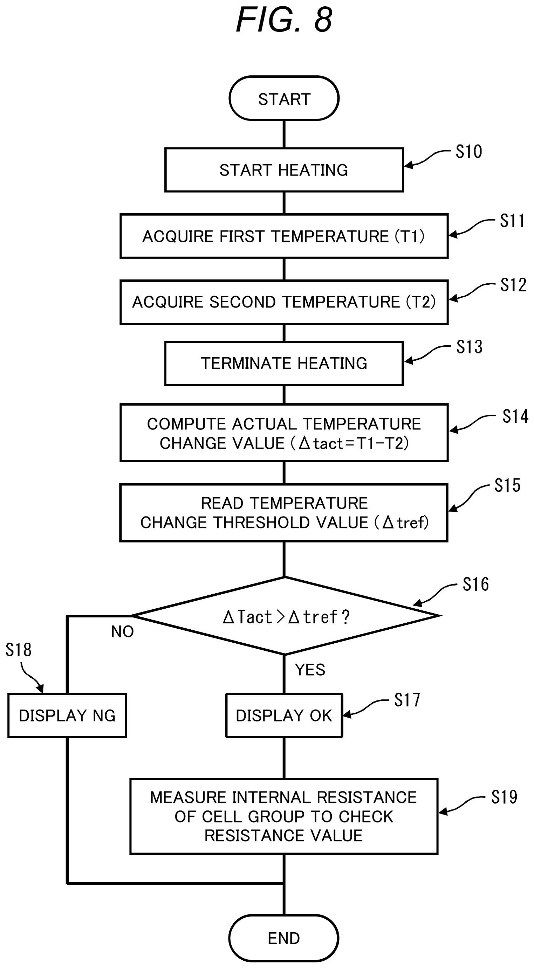

A description will be given to a concrete control flow performed at the inspection controller 31 with reference to Fig. 8. This control flow is initiated when an inspection becomes ready (when an instruction to start an inspection is issued to the inspection controller) and is thereafter performed at predetermined time intervals.

### <Step S10>

At Step S10, at time (t0) in Fig. 7, the temperature control member 28 is brought into contact with the planar area 21 of the battery container 13a to start heating. When heating is started, the flow proceeds to Step S11.

### <Step S11>

At Step S11, at time (t1) when a predetermined time has passed from time (t0) in Fig. 7, temperature information (T1) is acquired from the thermistor 23 and stored in a predetermined area in the RAM. When temperature information (T1) is acquired, the flow proceeds to Step S12.

### <Step S12>

At Step S12, at time (t2) when a predetermined time has passed from time (t1) in Fig. 7, temperature information (T2) is acquired from the thermistor 23 and is stored in a predetermined area in the RAM. When temperature information (T2) is acquired, the flow proceeds to Step S13.

### <Step S13>

At Step S13, the temperature control member 28 need not be heated because temperature information (T1) was detected at Step S11 and temperature information (T2) was detected at Step S12 and a first temperature (T1) and a second temperature (T2) have been already stored in the RAM area. Therefore, heating of the temperature control member 28 is stopped. When heating of the temperature control member 28 is stopped, the flow proceeds to Step S14. Thus, an unnecessary power consumption can be avoided and the thermistor 23 can be prevented from being unnecessarily heated.

### <Step S14>

At Step S14, temperature information (T1) stored in the RAM area and temperature information (T2) stored in the RAM area are read. Then, an actual temperature change value (ΔTact) is computed and stored in a new RAM area. The formula for computation is "ΔTact=T2-T1." When the actual temperature change value (ΔTact) is computed, the flow proceeds to Step S15.

### <Step S15>

At Step S15, a temperature change threshold value (ΔTref) for comparative determination made at the next step stored in the flash ROM is read and is stored in a RAM area. When the temperature change threshold value (ΔTref) is read, the flow proceeds to Step S16.

### <Step S16>

At Step S16, the actual temperature change value (ΔTact) obtained at Step S14 and the temperature change threshold value (ΔTref) obtained at Step S15 are subjected to comparative computation. When the actual temperature change value (ΔTact) is larger, the flow proceeds to Step 17 and when the actual temperature change value (ΔTact) is smaller, the flow proceeds to Step 18.

That the actual temperature change value (ΔTact) is larger means that heat is being favorably transferred from the temperature control member 28 to the thermistor 23. That is, it means that a state of contact between the thermistor 23 and the planar area 21 of the battery container 13a is normal.

Meanwhile, that the actual temperature change value (ΔTact) is smaller means that heat is not favorably transferred from the temperature control member 28 to the thermistor 23. That is, it means that a state of contact between the thermistor 23 and the planar area 21 of the battery container 13a is abnormal.

### <Step S17>

At Step S16, it has been determined that a state of contact between the thermistor 23 and the planar area 21 of the battery container 13a is favorable. Therefore, at Step S17, an indication (OK display) showing that the state of contact is normal is provided in a display device of the output unit 37. When the indication (OK display) showing that the state of contact is normal is provided, the flow proceeds to Step S19.

### <Step S18>

At Step S16, meanwhile, it has been determined that a state of contact between the thermistor 23 and the planar area 21 of the battery container 13a is not in a favorable state. Therefore, at Step S18, an indication (NG display) showing that the state of contact is abnormal is provided in the display device of the output unit 37. When the indication (NG display) showing that the state of contact is abnormal is provided, the flow exits to end and the processing is terminated. In this case, contact between the thermistor 23 and the planar area 21 of the battery container 13a is not kept in a favorable state. Therefore, the operator corrects a state of attachment of the thermistor 23 to the insulation cover 17 and performs the assembling work again and conducts the same inspection again.

### <Step S19>

At Step S19, since contact between the thermistor 23 and the planar area 21 of the battery container 13a is kept in a favorable state, an internal resistance of the cell group 12 is finally measured to check a resistance value. When this check is completed, the flow exits to end and the processing is terminated. In this case, since it has been determined that contact between the thermistor 23 and the planar area 21 of the battery container 13a is kept in a favorable state and an internal resistance of the cell group 12 is normal as well, the operator attaches the module cover 18 to the insulation cover 17 to complete the work of assembling the battery module 10.

The processing of obtaining an actual temperature change value (ΔTact) at Step S14 and the processing of obtaining a temperature change threshold value (ΔTref) at Step S15 may be inverted in order. The processing of terminating heating at Step S13 may be performed in the course of Step S14 to Step S18.

As mentioned above, a "thermistor inspection" at Steps S10 to S18 and a "battery resistance inspection" at Step S19 may be separately and independently conducted. Thus, an inspection task can be precisely performed.

As mentioned above, the present embodiment includes: the unit cell 13 having the battery container 13a housing the battery element; the thermistor 23 thermally connected with the outer surface of the battery container 13a in contact therewith; and the electrically insulating rigid insulation cover 17 that covers a part of the battery container 13a and presses the thermistor 23 against the battery container 13a. The inspection through hole 26 through which the heat application means 28, 29 is passed is formed in the insulation cover 17. The thermistor 23 is disposed outside the heat application area obtained when the inspection through hole 26 is projected to the planar area 21 of the battery container 13a.

According to the foregoing, a temperature of the vicinity of the thermistor 23 can be raised or lowered in a short time by directly heating or cooling the heat application area by the heat application means 28, 29 through the inspection through hole 26 provided in the insulation cover 17. Thus, an inspection can be efficiently conducted.

The inspection through hole 26 may be closed with a lid portion (not shown) provided in the insulation cover 17 or may be shielded from the outside by the module cover 18 without providing the lid portion in the insulation cover 17.

The module cover 18 opposed to the insulation cover 17 may also be provided with an inspection through hole and after attaching the module cover 18, heat may be given to the battery container 13 as a heat application means through the inspection through holes formed in the module cover 18 and the insulation cover 17 to conduct an inspection. According to this, an inspection can be conducted after assembling of the battery module 10 is completed.

### Embodiment 2

A description will be given to a second embodiment of the present invention. The same reference signs as in Fig. 3 indicate components having identical functions and a description will be omitted if unnecessary.

The present embodiment is characterized in that a heat application marking 38 is provided in the heat application area 27. In the heat application area 27 corresponding to the inspection through hole 26, a best heat application location is present. For example, the location closest to the thermistor 23 is best in consideration of heat transfer efficiency.

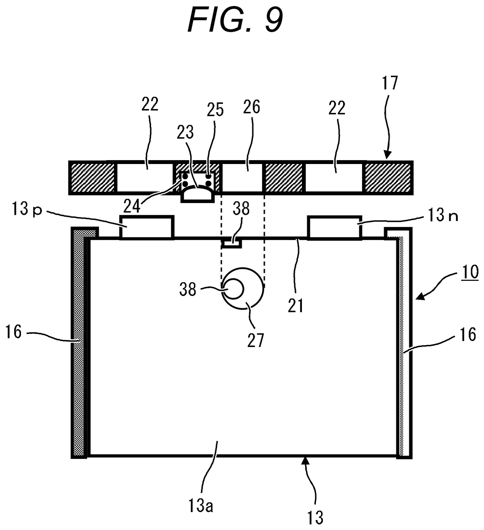

In the circular heat application area 27 formed in the planar area 21 of the battery container 13a in Fig. 9, the heat application marking 38 is formed in a location closest to the thermistor 23 placed in the planar area. The heat application marking 38 is selected from among, for example, a hole, a recess, a projection, and a color coating. A hole, a recess, or a projection is preferably formed integrally with the planar area 21 by deforming the planar area 21. This is because obstruction in thermal conduction to the thermistor 23 due to the presence of the heat application marking 38 can be suppressed as compared with a structure in which the heat application marking 38 is formed of a member different from that of the planar area 21. In addition, an advantage of a reduced processing cost of the heat application marking 38 is also brought about. By providing such a heat application marking 38, positioning of the temperature control member 28 can be facilitated and an inspection task can be simplified.

When laser light is used as a heat application means, temperature rise can be accelerated by coating the heat application marking 38 in black. In this case, the laser irradiation member 29 only has to be disposed outside and above the insulation cover 17. Therefore, the temperature control member 28 need not be inserted into the inspection through hole 26 and an inspection task can be simplified.

### Embodiment 3

A description will be given to a third embodiment of the present invention. The same reference signs as in Fig. 3 indicate components having identical functions and a description will be omitted if unnecessary.

The present embodiment is characterized in that a protective sheet 39 is provided in the planar area 21 in the upper face of the battery container 13a but a protective sheet 39 is not provided in a location of the heat application area 27.

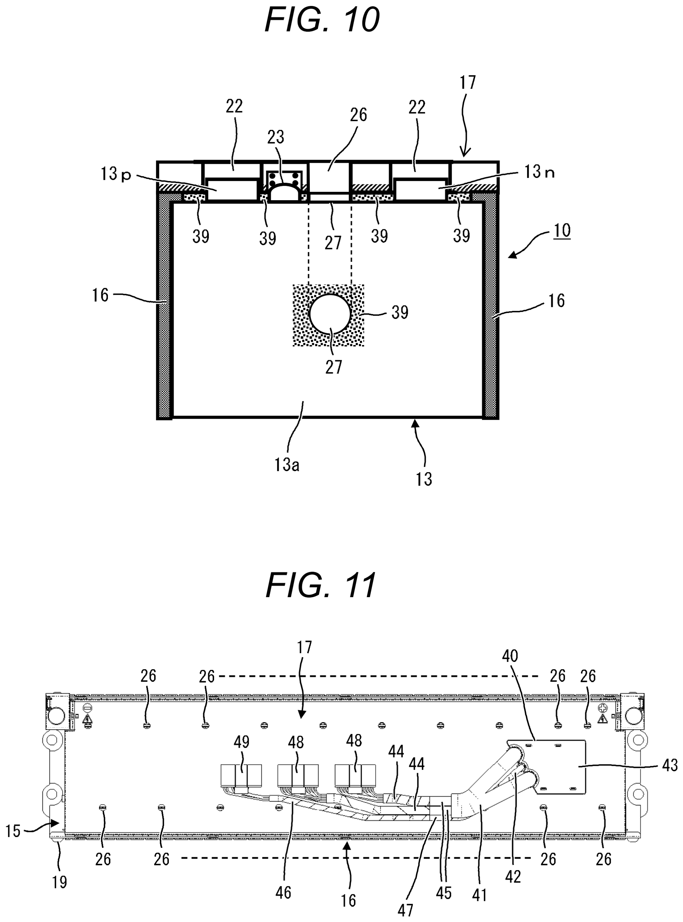

In Fig. 10, the protective sheet 39 is attached to the planar area 21 of the battery container 13a for the purpose of insulation and protection. This protective sheet 39 is laid over the planar area 21 of the battery container 13a except areas encircling the cell positive electrode terminal 13p, the cell negative electrode terminal 13n, and the thermistor 23. The upper face side of the battery container 13a is thereby insulated and protected. However, the protective sheet 39 is not laid in the heat application area 27 corresponding to the inspection through hole 26 to prevent degradation in heat transfer efficiency. Therefore, heating of the heat application area 27 by the temperature control member 28 or the laser irradiation member 29 is not hindered by the protective sheet 39. Since heat transfer is not hindered by the protective sheet 39 as mentioned above, enhancement of inspection precision and shortening of an inspection time can be implemented.

### Embodiment 4

A description will be given to a fourth embodiment of the present invention. The same reference signs as in Fig 1 and Fig. 2 indicate components having identical functions and a description will be omitted if unnecessary.

The present embodiment is characterized in that a leader line of the thermistor 23 is installed on the upper face of the insulation cover 17, that is, on a surface on the opposite side to the cell group 12. Unlike the insulation cover 17 shown in Fig. 2, the insulation cover 17 in the present embodiment is formed on the whole in a shape of a plate having a flat part and is so configured that the cell group 12 is covered with the insulation cover 17.

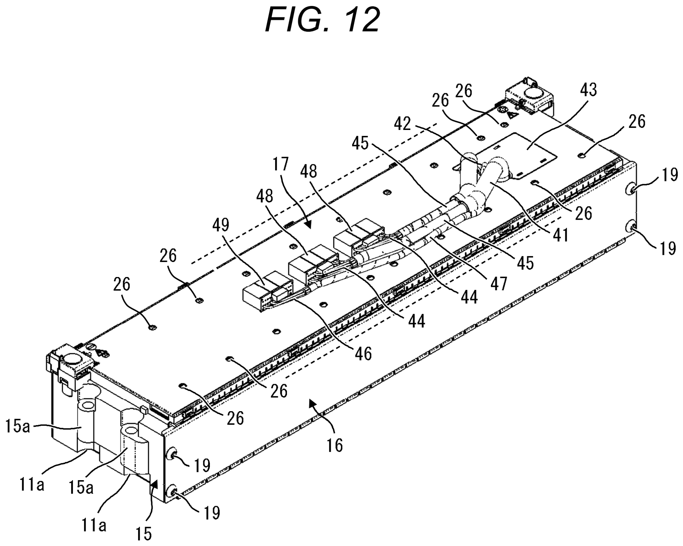

In Fig. 11 and Fig. 12, an opening 40 having a predetermined size is formed in one end portion of the insulation cover 17. The insulation cover 17 is on the whole in a shape of a plate having a flat part and is extended in the longitudinal direction along the lamination direction of the cell group 12. The cell group 12 is so configured as to be covered with the insulation cover 17.

The opening 40 is opened in a direction orthogonal to the lamination direction of the cell group 12 and a battery voltage detection terminal holder 41 and a thermistor voltage detection terminal holder 42 formed of synthetic resin are exposed through the opening 40. A lid portion 43 formed of synthetic resin as well is attached to the opening 40 so as to close the opening except the battery voltage detection terminal holder 41 and the thermistor voltage detection terminal holder 42.

A battery voltage detection line housing portion 45 housing a battery voltage detection line 44 as a signal leader line is attached to the battery voltage detection terminal holder 41. Similarly, a thermistor voltage detection line housing portion 47 housing a thermistor voltage detection line 46 as a signal leader line is attached to the thermistor voltage detection terminal holder 42. The battery voltage detection line 44 is connected to a socket 48 and the thermistor voltage detection line 46 is also connected to a socket 49.

The sockets 48, 49 are fixed to the upper face of the insulation cover 17 by an appropriate fixing means (bolt, adhesion, engaging mechanism, or the like). The socket 48 is connected to a battery controller provided in the battery module 10 and the socket 49 is connected to the inspection controller 31 (refer to Fig. 6).

Since the insulation cover 17 is extended along the lamination direction (longitudinal direction) of the cell group 12 as mentioned above, the inspection through hole 26 is also formed along the direction. The inspection through hole 26 is intermittently and continuously formed in two rows in the vicinity of both end faces of the insulation cover 17 in the short-length direction.

The above-mentioned opening 40, battery voltage detection terminal holder 41, thermistor voltage detection terminal holder 42, lid portion 43, battery voltage detection line 44, battery voltage detection line housing portion 45, thermistor voltage detection line 46, thermistor voltage detection line housing portion 47, and sockets 48, 49 are disposed between the two rows of the inspection through holes 26.

By adopting such a construction of configuration as shown in Fig. 11 and Fig. 12 as mentioned above, the upper face of the insulation cover 17 can be efficiently utilized.

### Embodiment 5

The above-mentioned embodiments are so configured that heat is applied to the planar area 21 in the upper face of the battery container 13a from outside the insulation cover 17. Instead, a temperature control member may be disposed directly in the planar area 21 in the upper face of the battery container 13a. A description will be given to a fifth embodiment of the present invention.

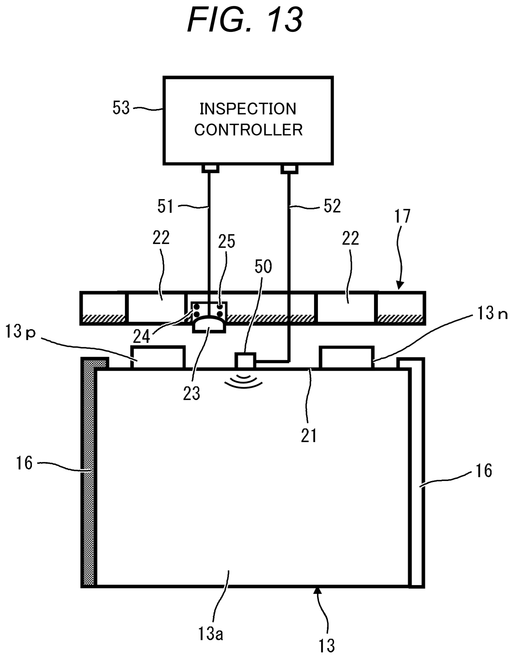

In Fig. 13, a temperature control member 50 is attached to a position corresponding to the heat application area 27 shown in Fig. 3 so that heat can be transferred. The temperature control member 50 is disposed in a position corresponding to the heat application area 27 as an example. However, the temperature control member need not be disposed in a position corresponding to the heat application area 27 because acceptability of contact between the thermistor 23 and the planar area 21 can be determined as long as the temperature control member 50 and the thermistor 23 are not in mechanical contact with each other. However, it is desirable to dispose the temperature control member and the thermistor close to each other as much as possible.

The temperature control member 50 is formed of a heating element having an electric resistance and one using a nichrome wire, one utilizing a PTC element, and one utilizing a semiconductor element can be used as the temperature control member. Needless to add, any other heating element than described above can be utilized and a Peltier element or the like giving cold heat can also be utilized.

The temperature control member 50 is disposed in the planar area 21 in the upper face of the battery container 13a even after assembling of the battery module 10 is completed. Therefore, the same working effects as with the above-mentioned embodiments are obtained by connecting a wire 51 of the thermistor 23 and a wire of the temperature control member 50 to the inspection controller 53. The inspection controller 53 cited here is identical with the inspection controller 31 shown in Fig. 6 and a method for determining the acceptability of contact of the thermistor 23 is also identical with the control flow shown in Fig. 6.

According to the present embodiment, as mentioned above, thermal energy can be given directly to the battery container 13a by the temperature control member 50; therefore, a small amount of thermal energy is sufficient and a power consumption can be reduced. Since the thermistor 23 and the temperature control member 50 are in proximity to each other, heat is immediately transferred to the thermistor 23 and an operation of the thermistor can be checked in a short time.

When an output voltage of the thermistor 23 is not produced even by applying heat by the temperature control member 50, it can be detected that the thermistor 23 itself involves a failure or a problem. Whether contact between the thermistor 23 and the planar area 21 of the battery container 13a is kept in a favorable state can be detected according to an amount of temperature change within a predetermined time.

### Embodiment 6

The above-mentioned fifth embodiment is so configured that the acceptability of contact between the thermistor 23 and the planar area 21 is determined by the externally provided inspection controller 53. Instead of the inspection controller 53, the acceptability of contact between the thermistor 23 and the planar area 21 can also be determined on board by a battery controller provided in the battery module 10. The same reference signs as in Fig. 13 indicate components having identical functions and a description will be omitted if unnecessary.

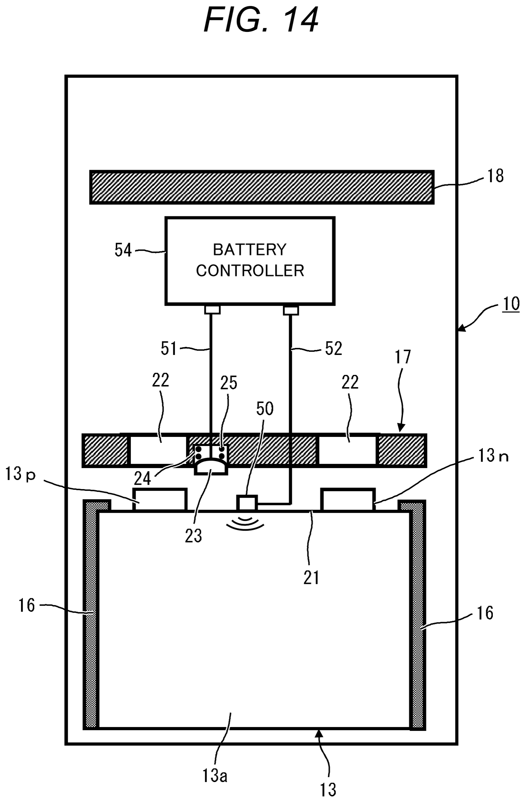

In Fig. 14, the battery controller (which can also be referred to as heat application controller) 54 is disposed between the insulation cover 17 and the module cover 18. That is, the battery controller 54 is disposed on the opposite side of the insulation cover 17 to the cell group 12 (refer to Fig. 2) in the height direction of the housing 11 (refer to Fig. 1) and is electrically connected with a plurality of bus bars 20 (refer to Fig. 2), the thermistor 23, the temperature control member 50, and the like through a connection conductor such as a lead wire or a printed wiring. The battery controller 54 can be attached to the insulation cover 17 or the module cover 18.

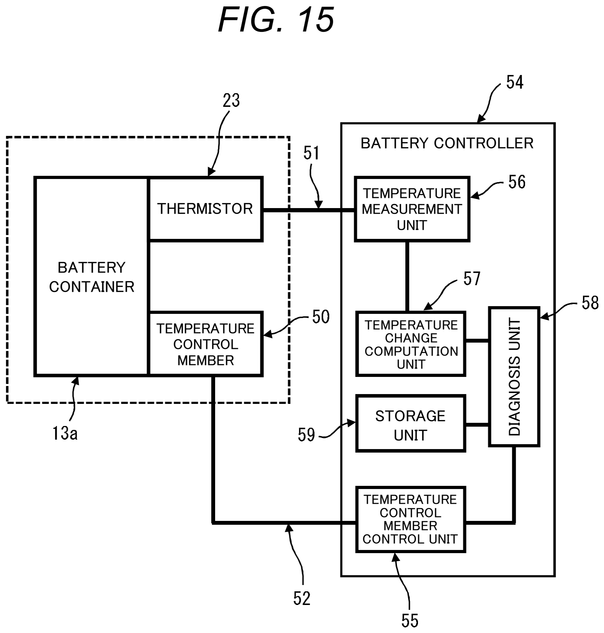

The battery controller 54 has a function of controlling charging and discharging of the battery module 10 but this function is irrelevant to the present invention and a description thereof will be omitted. In addition, the battery controller 54 is provided with a function of determining the acceptability of contact between the thermistor 23 and the planar area 21. Fig. 15 illustrates functional blocks thereof but the functions thereof are almost identical with those illustrated in Fig. 6.

In Fig. 15, a temperature control member control unit 55 provided in the battery controller 54 exercises heating control on the temperature control member 50 through a wire 52 and controls heating start timing, a heating duration, heating end timing, an amount of heating energy, and the like. An output voltage of the thermistor 23 produced by this heating is inputted to a temperature measurement unit 56 provided in the battery controller 54 through a wire 51 at predetermined time intervals and converted into temperature information there. The temperature information can be obtained by utilizing an "output voltage-temperature table." This temperature information is stored in a RAM area (not shown) of the battery controller 54 at predetermined time intervals.

The battery controller 54 is provided with a temperature change computation unit 57, which computes how much a temperature of the thermistor 23 has changed (difference) within a predetermined time period. A result of this computation is inputted to a subsequent diagnosis unit 58 as an actual temperature change value (ΔTact). This actual temperature change value (ΔTact) can be obtained by reading temperature information stored in the RAM area. An actual temperature change value can be obtained by subtracting temperature information (T1) stored at some time from temperature information (T2) stored at time a predetermined time after when the temperature information (T1).

The battery controller 54 includes a storage unit 59 comprised of a flash ROM and the like and a temperature change threshold value (ΔTref) is stored in the storage unit 59. The temperature change threshold value (ΔTref) is taken as a reference value for determining whether contact between the thermistor 23 and the planar area 21 of the battery container 13a is kept in a favorable state. The temperature change threshold value (ΔTref) is inputted to the subsequent diagnosis unit 58. The temperature change threshold value (ΔTref) is as described with reference to Fig. 7.

When it is determined by the diagnosis unit 58 of the battery controller 54 whether contact between the thermistor 23 and the planar area 21 of the battery container 13a is in a favorable state, a result of this determination is sent to the storage unit 59 and stored there. In this case, what is stored is an error code, an operator can grasp a result of diagnosis by reading this error code with a dedicated inspection apparatus.

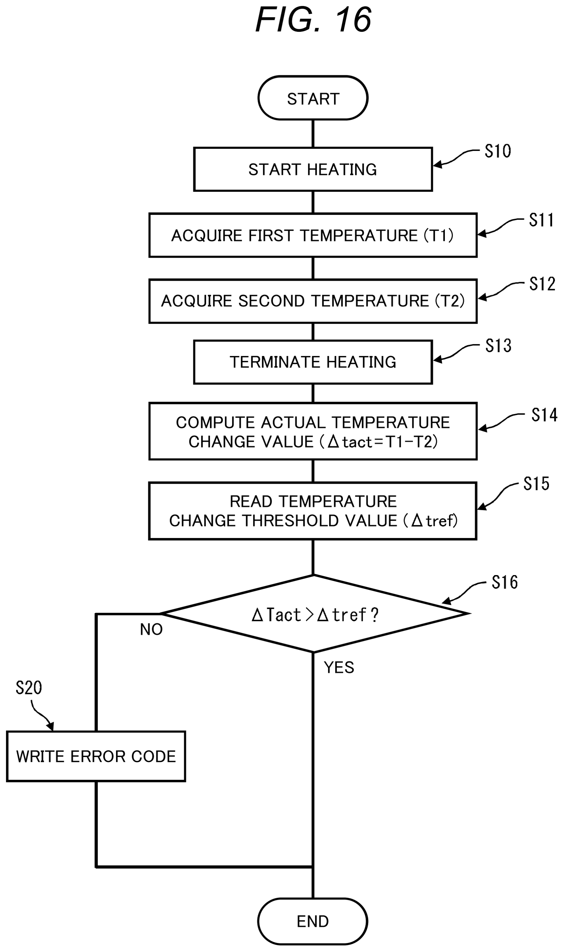

Fig. 16 is a control flow in the battery controller 54 for determining whether contact between the thermistor 23 and the planar area 21 of the battery container 13a is kept in a favorable state. Almost all the control steps are identical with those of the control flow in Fig. 8; therefore, a description of the identical control steps will be omitted.

### <Step S10> to <Step S16>

These steps are substantially the same as of the control flow shown in Fig. 8 and a description thereof will be omitted. However, the control step S10 in Fig. 16 is different from the control step S10 in Fig. 8, in which the temperature control member 28 is used, in that the temperature control member 50 is used.

### <Step S20>

When it is determined at Step S16 that contact between the thermistor 23 and the planar area 21 of the battery container 13a is not kept in a favorable state, at Step S20, an error code is stored in the storage unit 59. Since the storage unit 59 is constructed of a flash ROM, the error code is not lost even when power supply thereto is shut down. When the error code is stored, the flow exits to end and the processing is terminated.

As a result of an analysis of the error code by the operator, contact between the thermistor 23 and the planar area 21 of the battery container 13a is not kept in a favorable state. Therefore, the operator corrects a state of attachment of the thermistor 23 to the insulation cover 17 and performs assembling work again to cope with this problem. The operator only has to execute the control flow (replication flow) in Fig. 16 to confirm that contact between the thermistor 23 and the planar area 21 of the battery container 13a is kept in a favorable state.

Also, according to the present embodiment, as mentioned above, thermal energy can be given directly to the battery container 13a by the temperature control member 50; therefore, a small amount of thermal energy is sufficient and a power consumption can be reduced. Since the thermistor 23 and the temperature control member 50 are in proximity to each other, heat is immediately transferred to the thermistor 23 and an operation of the thermistor can be checked in a short time.

When an output voltage of the thermistor 23 is not produced even by applying heat by the temperature control member 50, it can be detected that the thermistor 23 itself involves a failure or a problem. Whether contact between the thermistor 23 and the planar area 21 of the battery container 13a is kept in a favorable state can be detected according to an amount of temperature change within a predetermined time.

According to the present embodiment, the battery controller 54 is caused to determine whether contact between the thermistor 23 and the planar area 21 of the battery container 13a is kept in a favorable state. Therefore, in a situation in which the battery module 10 is in operation, the above-mentioned diagnosis can be performed with arbitrary timing. For example, the control flow shown in Fig. 16 can be executed at the time of shipment or each time a predetermined time has passed after installation in a vehicle.

Up to this point, a detailed description has been given to embodiments of the present invention. But the present invention is not limited to the above-mentioned embodiments and various design changes may be made without departing from the spirit of the present invention described in CLAIMS. For example, the above-mentioned embodiments are described in detail to make the present invention understandable and all the above-mentioned configuration elements need not be provided. Some of the configuration elements of some embodiment can be replaced with a configuration element of any other embodiment and a configuration element can be added to the configuration elements of any other embodiment. Some of the configuration elements of each embodiment can be added to, deleted from, or be replaced with any other configuration element.

### Reference Signs List

- 10...: battery module
- 11...: housing,
- 12...: cell group,
- 13...: unit cell
- 13a...: battery container,
- 13p...: cell positive electrode terminal
- 13n...: cell negative electrode terminal
- 14...: cell holder,
- 15...: end plate,
- 16...: side plate,
- 17...: insulation cover,
- 18...: module cover,
- 21...: planar area,
- 22...: terminal housing portion,
- 20...: module cover,
- 23...: thermistor,
- 24...: housing recessed portion,
- 25...: repelling means,
- 26...: inspection through hole,
- 27...: heat application area,
- 28...: temperature control member,
- 29...: laser irradiation member,
- 31...: controller,
- 32...: temperature control member control unit,
- 33...: temperature measurement unit,
- 34...: temperature change computation unit,
- 35...: storage unit,
- 36...: diagnosis unit,
- 37...: output unit

### RELEVANT ASPECTS OF THE INVENTION:

[1] A battery module comprising:
   a cell including a battery container housing a battery element;
   a temperature detector thermally connected with the battery container in contact with the outer surface of the battery container; and
   an electrically insulating rigid covering member which partly covers the battery container and brings the temperature detector into contact with the battery container,
   wherein an inspection through hole through which a heat application means is passed is formed in the covering member and the temperature detector is disposed in a position outside a heat application area obtained by orthographically projecting the inspection through hole onto the outer surface of the battery container.
[2] The battery module according [1],
   wherein the temperature detector is disposed in the outer surface on the side of a cell positive electrode terminal and a cell negative electrode terminal provided in the battery container, and
   wherein the covering member is so disposed as to cover the temperature detector and the temperature detector is disposed adjacently to the heat application area formed by the inspection through hole.
[3] The battery module according to [2], wherein the temperature detector is provided in the covering member in a position adjacent to the inspection through hole formed in the covering member.
[4] The battery module according to [2], wherein the heat application means transfers hot heat or cold heat to the battery container in contact with the heat application area.
[5] The battery module according to [4], wherein the heat application means is formed of a resistance heating element and transfers heat to the battery container in contact with the heat application area.
[6] The battery module according to [2], wherein the heat application means gives heat to the battery container in non-contact with the heat application area.
[7] The battery module according to [6], wherein the heat application means is formed of a laser irradiation member and applies laser light to the heat application area to give heat to the battery container.
[8] The battery module according to any one of [2] to [7, wherein a heat application marking is provided in the heat application area.
[9] The battery module according to any one of [2] to [7], wherein a protective sheet is laid in an area of the battery container on the side where the temperature detector, the cell positive electrode terminal, and the cell negative electrode terminal are located except the heat application area.
[10] The battery module according to any one of [2] to [7],
   wherein a plurality of the cells are laminated in one direction to form a cell group, and
   wherein the covering member is extended in the one direction so as to cover the cell group and includes an opening opened in a predetermined position and a signal leader wire of the temperature detector is led out of the opening, the signal leader wire being disposed along the one direction of the covering member.
[11] The battery module according to [10], wherein two rows of the inspection through holes are intermittently and continuously formed in the covering member along the one direction at both ends in a direction orthogonal to the one direction and the signal leader wire is disposed between the two rows of the inspection through holes.
[12] The battery module according to [11], wherein the signal leader wire is connected to a socket fixed to the covering member.
[13] A method for inspecting a battery module, comprising:
   a heat application step of giving heat to the heat application area in the battery container of the battery module according to any one of [1] to [9] through the inspection through hole by the heat application means;
   a temperature change value measuring step of, after the heat application step, obtaining a temperature change value from the temperature detector between before and after a predetermined time has passed; and
   a diagnosis step of, after the temperature change value measuring step, comparing the temperature change value with a predetermined temperature change threshold value, when the temperature change value is larger than the temperature change threshold value, determining that a state of contact between the temperature detector and the battery container is normal, and when the temperature change value is smaller than the temperature change threshold value, determining that a state of contact between the temperature detector and the battery container is abnormal.
[14] A method for inspecting a battery module, comprising:
   a heat application step of giving heat to the heat application area in the battery container of the battery module according to any one of [1] to [9] through the inspection through hole by the heat application means;
   a temperature change rate measuring step of, after the heat application step, obtaining a temperature change rate value from a temperature change value from the temperature detector between before and after a predetermined time has passed; and
   a diagnosis step of, after the temperature change rate measuring step, comparing the temperature change rate value with a predetermined temperature change rate threshold value, when the temperature change rate value is larger than the temperature change rate threshold value, determining that a state of contact between the temperature detector and the battery container is normal, and when the temperature change rate value is smaller than the temperature change rate threshold value, determining that a state of contact between the temperature detector and the battery container is abnormal.
[15] The method for inspecting a battery module according to [13], wherein the temperature change threshold value is a reference value for determining whether contact between the temperature detector and the outer surface of the battery container is kept in a favorable state.
[16] The method for inspecting a battery module according to [14], wherein the temperature change rate threshold value is a reference value for determining whether contact between the temperature detector and the outer surface of the battery container is kept in a favorable state.
[17] The method for inspecting a battery module according to [13] or [14], wherein the heat application means used at the heat application step transfers hot heat or cold heat to the battery container in contact with the heat application area.
[18] The method for inspecting a battery module according to [17], wherein the heat application means is formed of a resistance heating element and transfers heat to the battery container in contact with the heat application area.
[19] The method for inspecting a battery module according to [13] or [14], wherein the heat application means used at the heat application step gives heat to the battery container in non-contact with the heat application area.
[20] The method for inspecting a battery module according to [19], wherein the heat application means is formed of a laser irradiation member and applies laser light to the heat application area to give heat to the battery container.
[21] The method for inspecting a battery module according to any one of [13] to [20], comprising:
   an internal resistance diagnosis step of, after the diagnosis step, measuring an internal resistance of the cell to determine a quality of the cell.
[22] A battery module, comprising:
   a cell including a battery container housing a battery element;
   a temperature detector thermally connected with the battery container in contact with the outer surface of the battery container; and
   an electrically insulating rigid covering member which partly covers the battery container and brings the temperature detector into contact with the battery container,
   wherein the battery container is provided in the outer surface thereof with a heat application means disposed in proximity to the temperature detector and the heat application means is controlled by a heat application controller, and
   wherein the heat application controller includes:
      a heat application functional part that gives heat to the temperature detector by the heat application means;
      a temperature change value measurement functional part that, after heat is given by the heat application functional part, obtains a temperature change value from the temperature detector between before and after a predetermined time has passed; and
      a diagnosis functional part that compares the temperature change value with a predetermined temperature change threshold value, when the temperature change value is larger than the temperature change threshold value, determines that a state of contact between the temperature detector and the battery container is normal, and when the temperature change value is smaller than the temperature change threshold value, determines that a state of contact between the temperature detector and the battery container is abnormal.
[23] The battery module according to [22], wherein an outer covering member that covers the covering member is provided outside the covering member and the heat application controller is disposed between the covering member and the outer covering member.

## Claims

1. A battery module (10) comprising:
a cell (13) including a battery container (13a) housing a battery element;
a temperature detector (23) thermally connected with the battery container (13a) in contact with the outer surface of the battery container (13a);
an electrically insulating rigid covering member (17) which partly covers the battery container (13a) and brings the temperature detector (23) into contact with the battery container (13a); and
a module cover (18) that covers the covering member (17),
wherein an inspection through hole (26) through which a heat application means (28, 29) is passed is formed in the covering member (17) and the temperature detector (23) is disposed in a position outside a heat application area (27) obtained by orthographically projecting the inspection through hole (26) onto the outer surface of the battery container (13a), and
wherein the covering member (17) has, on its surface opposite to the surface facing the battery container (13a), a partition wall that surrounds bus bars (20), and an arrangement portion in which electric wiring connected to an electronic circuit board constituting a battery controller is arranged.

2. The battery module (10) according to claim 1, wherein a protective sheet (39) is provided over part or all of a planar area (21) of the upper face of the battery container (13a).

3. The battery module (10) according to claim 2, wherein
the protective sheet (39) is not provided in a location of the heat application region (27) where heat is applied by the heat application means (28, 29), and
the heat application region (27) and the temperature detector (23) are positioned so as to be thermally connected.

4. The battery module (10) according to claim 3, wherein
the temperature detector (23) is disposed in the outer surface on the side of a cell positive electrode terminal (13p) and a cell negative electrode terminal (13n) provided in the battery container (13a),
the covering member (17) is so disposed as to cover the temperature detector (23) and the temperature detector (23) is disposed adjacently to the heat application area (27) formed by the inspection through hole (26), and
the protective sheet (39) is preferably laid in an area of the battery container (13a) on the side where the temperature detector (23), the cell positive electrode terminal (13p), and the cell negative electrode terminal (13n) are located except the heat application area (27).

5. The battery module (10) according to any preceding claim, wherein
the covering member (17) has a housing recessed portion (24) that houses the temperature detector (23) and a repelling means (25) that presses the temperature detector (23) against the outer surface of the battery container (13a), and
the temperature detector (23) is provided in the covering member (17) at a position adjacent to the inspection through-hole (26) formed in the covering member (17).

6. The battery module (10) according to any preceding claim, wherein
a heat application marking (38) is provided in the heat application area (27), and
the heat application area (27) preferably has a color coating that serves as a marker for applying heat.

7. The battery module (10) according to any preceding claim, wherein
a plurality of the cells (13) are laminated in one direction to form a cell group (12), and
the covering member (17) is extended in the one direction so as to cover the cell group (12) and includes an opening opened in a predetermined position and a signal leader wire of the temperature detector (23) is led out of the opening, the signal leader wire being disposed along the one direction of the covering member (17).

8. The battery module (10) according to claim 7, wherein
two rows of the inspection through holes (26) are intermittently and continuously formed in the covering member (17) along the one direction at both ends in a direction orthogonal to the one direction and the signal leader wire is disposed between the two rows of the inspection through holes (26), and
the signal leader wire is preferably connected to a socket fixed to the covering member (17).

9. A method for inspecting a battery module (10), comprising:
a heat application step of giving heat to the heat application area (27) in the battery container (13a) of the battery module (10) according to any one of claims 1 to 8 through the inspection through hole (26) by the heat application means (28, 29);
a temperature change value measuring step of, after the heat application step, obtaining a temperature change value from the temperature detector (23) between before and after a predetermined time has passed; and
a diagnosis step of, after the temperature change value measuring step, comparing the temperature change value with a predetermined temperature change threshold value, when the temperature change value is larger than the temperature change threshold value, determining that a state of contact between the temperature detector (23) and the battery container (13a) is normal, and when the temperature change value is smaller than the temperature change threshold value, determining that a state of contact between the temperature detector (23) and the battery container (13a) is abnormal.

10. A method for inspecting a battery module (10), comprising:
a heat application step of giving heat to the heat application area (27) in the battery container (13a) of the battery module (10) according to any one of claims 1 to 8 through the inspection through hole (26) by the heat application means (28, 29);
a temperature change rate measuring step of, after the heat application step, obtaining a temperature change rate value from a temperature change value from the temperature detector (23) between before and after a predetermined time has passed; and
a diagnosis step of, after the temperature change rate measuring step, comparing the temperature change rate value with a predetermined temperature change rate threshold value, when the temperature change rate value is larger than the temperature change rate threshold value, determining that a state of contact between the temperature detector (23) and the battery container (13a) is normal, and when the temperature change rate value is smaller than the temperature change rate threshold value, determining that a state of contact between the temperature detector (23) and the battery container (13a) is abnormal.

11. The battery module inspecting method according to claim 9 or 10, wherein the temperature change threshold value or the temperature change rate threshold value is a reference value for determining whether contact between the temperature detector (23) and the outer surface of the battery container (13a) is kept in a favorable state.

12. The battery module (10) according to any of claims 1 to 8 or the battery module inspecting method according to any of claims 9 to 11, wherein
the heat application means (28) transfers hot heat or cold heat to the battery container (13a) in contact with the heat application area (27).
the heat application means (28) is preferably formed of a resistance heating element and transfers heat to the battery container (13a) in contact with the heat application area (27).

13. The battery module (10) according to any of claims 1 to 8 or the battery module inspecting method according to any of claims 9 to 11, wherein
the heat application means (29) gives heat to the battery container (13a) in non-contact with the heat application area (27), and
the heat application means is preferably formed of a laser irradiation member (29) and applies laser light to the heat application area (27) to give heat to the battery container (13a).

14. The battery module inspecting method according to any one of claims 9 to 13, comprising:
an internal resistance diagnosis step of, after the diagnosis step, measuring an internal resistance of the cell (13) to determine a quality of the cell (13).

15. The battery module inspection method according to claim 14, which comprises covering the covering member (17) with the module cover (18) after performing the internal resistance diagnosis process.
